# FASCICULE DE BREVET EUROPEEN

(11) **EP 3 292 004 B1**
(45) Date de publication et mention de la délivrance du brevet: **01.07.2020**
(21) Numéro de dépôt: 16723441.8
(22) Date de dépôt: 04.05.2016
(51) Int. Cl.: B60C 11/03, B60C 11/12

(54) **BANDE DE ROULEMENT COMPORTANT UN BLOC PRÉSENTANT UNE PLURALITÉ DE DÉCOUPURES**
REIFENLAUFFLÄCHE MIT EINEM BLOCK MIT EINER VIELZAHL VON AUSSCHNITTEN
TYRE TREAD COMPRISING A BLOCK HAVING A PLURALITY OF CUTOUTS

(30) Priorité: 07.05.2015 FR 1554094
(43) Date de publication de la demande: 14.03.2018
(73) Titulaire: Compagnie Générale des Etablissements Michelin, 63000 Clermont-Ferrand (FR)
(72) Inventeur: MUHLHOFF, Olivier, 63040 Clermont-Ferrand Cedex 9 (FR); DURAND-GASSELIN, Benoit, 63040 Clermont-Ferrand Cedex 9 (FR)
(74) Mandataire: Demaure, Pierre-Yves
(86) Numéro de dépôt international: PCT/FR2016/051057
(87) Numéro de publication internationale: WO 2016/177975

(56) Documents cités:
- EP-A1- 0 561 531
- EP-A1- 1 616 719
- EP-A1- 2 261 064
- WO-A1-01/39572
- WO-A1-2016/056168

## Description

### DOMAINE DE L'INVENTION

La présente invention concerne une bande de roulement d'un pneumatique pour véhicule automobile pourvu de moyens pour réduire de façon sensible le bruit en roulage.

### ETAT DE LA TECHNIQUE

De façon usuelle, les pneumatiques pour véhicule de tourisme sont pourvus d'une armature de carcasse qui est aujourd'hui radiale en grande majorité ; dans cette configuration, les renforts de l'armature de carcasse sont disposés de façon à faire un angle supérieur ou égal à 80 degrés et inférieur à 100 degrés avec une direction circonférentielle.

En outre, les pneumatiques sont pourvus d'une armature de sommet comportant une pluralité de renforts noyés dans un matériau à base d'élastomères. Cette armature de sommet est recouverte radialement à l'extérieur par une bande de roulement en matériau caoutchoutique, cette bande ayant une surface, dite surface de roulement, destinée à être en contact avec la route pendant le roulage.

Afin d'assurer un niveau de sécurité indispensable par temps de pluie notamment, il est connu de pourvoir la bande de roulement avec une pluralité de rainures longitudinales d'orientation générale circonférentielle.

Un inconvénient de la présence de rainures longitudinales est la génération de vibrations de l'air circulant dans ces rainures notamment dans le contact avec la route. Ces vibrations sont la source de résonances générant un bruit en roulage.

Le document EP0324605 divulgue une bande de roulement comportant une pluralité de blocs alignés selon une direction circonférentielle. Dans ce document, les blocs sont inclinés d'un certain angle en vue de diminuer la génération de bruit en roulage.

Le document WO2012032144 divulgue une bande de roulement comportant une pluralité de blocs allongés s'étendant selon la direction circonférentielle. Chaque bloc allongé comporte une pluralité d'incisions d'orientation globalement transversale en vue d'améliorer l'adhérence de la bande de roulement, notamment lors d'un freinage sur un sol mouillé.

Le document EP0561531 décrit une bande de roulement comportant à l'épaule un bloc allongé avec une succession de découpures.

Le document WO2016056168 décrit une bande de roulement comportant des blocs allongés disposés au centre de la bande de roulement et comprenant une pluralité de découpures.

Il existe un besoin de limiter la génération de bruit d'une bande de roulement comprenant au moins un bloc allongé s'étendant selon une direction circonférentielle.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de la bande de roulement », on entend l'ensemble des points de la bande de roulement qui sont en contact avec la chaussée lorsque le pneumatique, gonflé à sa pression de référence roule sur cette chaussée. La pression de gonflage de référence est définie dans les conditions d'utilisation du pneumatique telles que définies notamment par la norme E.T.R.T.O (« European Tyre and Rim Technical Organisation »). La largeur C de la surface de la bande de roulement peut notamment être définie par la norme ETRTO tel que C= (1.075-0.005ar)*S^{1.001} avec ar le rapport nominal d'aspect et s la grosseur du boudin théorique sur une jante de mesure.

Par « bloc » sur une bande de roulement, on entend un élément en relief délimité par des rainures et comprenant des parois latérales et une face de contact, cette dernière étant destinée à venir en contact avec le sol au cours d'un roulage.

Par « bloc allongé », on entend un bloc présentant une largeur et une longueur sur la circonférence du pneumatique, cette longueur étant très supérieure à la largeur.

Par « nervure », on entend un bloc allongé qui s'étend sur toute la circonférence du pneumatique.

Par « rainure », on entend une découpure dans la bande de roulement délimitant des parois de matière, la largeur de cette découpure est telle que les parois associées à cette découpure ne peuvent pas venir en contact l'une contre l'autre dans des conditions usuelles de roulage. La largeur pour une rainure est supérieure à 2 millimètres.

Par « incision », on entend une découpure dans la bande de roulement délimitant des parois de matière, la largeur de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.

Par « direction transversale » ou « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la direction axiale.

Par « direction oblique », on entend une direction qui possède une composante axiale et une composante circonférentielle non nulles.

Par « niveau circonférentiel », on entend un ensemble de points formant une droite, cette droite étant perpendiculaire à la direction circonférentielle.

Par « plan médian », on entend un plan perpendiculaire à l'axe de rotation du pneumatique et qui passe par le milieu de la bande de roulement.

### RESUME DE L'INVENTION

L'invention concerne une bande de roulement pour pneumatique comportant au moins un bloc allongé en matériau caoutchoutique de largeur W et de longueur L avec L»W, ce bloc allongé s'étendant selon une direction circonférentielle lorsque la bande de roulement est montée sur le pneumatique. Le bloc allongé comporte une surface de contact destinée à venir en contact avec un sol et une première paroi latérale et une seconde paroi latérale délimitant cette surface de contact. Le bloc allongé comporte en outre une pluralité de découpures débouchant sur la surface de contact du bloc allongé. Les découpures s'étendent selon une direction oblique à partir de la première paroi latérale en direction de la seconde paroi latérale jusqu'à des extrémités de découpure. Pour au moins une découpure débouchant sur la première paroi latérale, son extrémité ne débouche pas sur la seconde paroi latérale et lorsque cette découpure atteint son extrémité de découpure une autre découpure débute à partir de la première paroi latérale, à un même niveau circonférentiel sur le bloc allongé. Les découpures sont des incisions. Deux découpures adjacentes dans le bloc allongé présentent des inclinaisons différentes et/ou des formes différentes et/ou des longueurs différentes.

L'invention propose ainsi d'assurer une continuité dans l'organisation des découpures dans le bloc allongé. En effet, lorsqu'une découpure atteint une de ses extrémités, une autre découpure débute à un même niveau circonférentiel. De cette manière, on limite la variation du taux d'entaillement selon la direction circonférentielle dans le bloc allongé et les performances acoustiques du pneumatique sont alors améliorées. En outre, en combinant des découpures différentes, on améliore le brouillage du signal sonore émis par le bloc allongé au cours d'un roulage.

Dans une variante de réalisation, l'autre découpure débouche sur la seconde paroi latérale.

Les découpures débouchant sur la seconde paroi latérale forment des sous-blocs dans le bloc allongé. Chaque sous-bloc comprend ainsi une découpure qui ne débouche pas sur cette seconde paroi latérale. On favorise ainsi la mise à plat du bloc allongé.

Dans une autre variante de réalisation, les découpures présentent des formes courbes sur la surface de contact du bloc allongé.

En utilisant des découpures de forme courbe, on améliore l'esthétisme global de la bande de roulement tout en limitant le bruit généré par le pneumatique.

Dans une variante de réalisation, les découpures comportent au moins deux parties d'inclinaisons différentes.

En utilisant des découpures complexes comportant au moins deux parties d'inclinaisons différentes, il est possible d'améliorer l'adhérence sur un sol mouillé tant en virage qu'en ligne droite.

Dans une autre variante de réalisation, les découpures sont des incisions.

On améliore ainsi l'adhérence de la bande de roulement sur sol mouillé en conservant une certaine rigidité globale du bloc allongé.

Dans une autre variante de réalisation, les découpures sont des rainures.

On améliore ainsi l'écoulement de l'eau hors de la bande de roulement lorsque le pneumatique roule sur un sol mouillé.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle d'une bande de roulement, selon un premier mode de réalisation de l'invention ;
- la **figure 2** représente schématiquement une seconde variante de réalisation de l'invention ;
- la **figure 3** représente schématiquement une troisième variante de réalisation de l'invention ;
- la **figure 4** représente schématiquement une quatrième variante de réalisation de l'invention ;
- la **figure 5** représente schématiquement une cinquième variante de réalisation de l'invention ;
- la **figure 6** représente schématiquement une sixième variante de réalisation de l'invention.

Dans la description qui va suivre, des éléments sensiblement identiques ou similaires seront désignés par des références identiques.

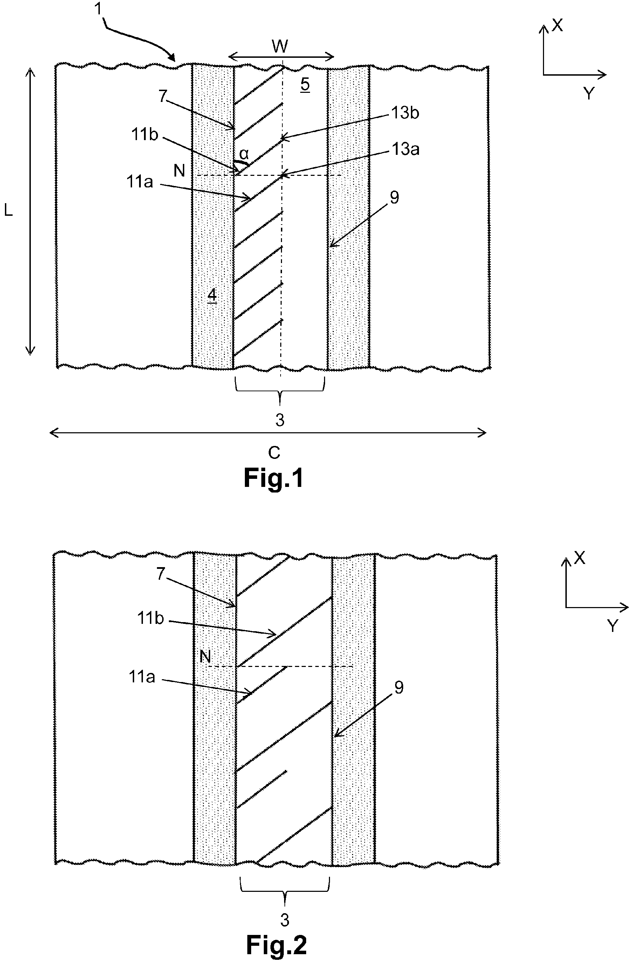

La **figure 1** représente une vue partielle d'une bande de roulement 1 d'un pneumatique selon un premier mode de réalisation de l'invention.

La bande de roulement 1 comporte au moins un bloc allongé 3 en matériau caoutchoutique. Le bloc allongé 3 est ici délimité par deux rainures 4 qui ont été ici grisées sur la **figure 1** pour favoriser la compréhension de l'invention. Le bloc allongé 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc allongé 3 a l'allure d'une bande s'étendant selon une direction circonférentielle X. Cette bande peut s'étendre sur toute la circonférence du pneumatique et le bloc allongé correspond alors à une nervure. En variante, cette bande s'étend sur une partie seulement de cette circonférence.

Le bloc allongé 3 comporte une surface de contact 5 destinée à venir en contact avec un sol et une première paroi latérale 7 et une seconde paroi latérale 9 délimitant cette surface de contact 5. Le bloc allongé 3 comporte en outre une pluralité de découpures obliques 11a, 11b débouchant sur la première paroi latérale 7 et s'étendant jusqu'à des extrémités 13a, 13b de découpures qui ne débouchent pas sur des parois latérales. Les extrémités 13a, 13b sont ici présentes au niveau d'un plan médian de la bande de roulement.

Les découpures 11a, 11b sont réparties sur la surface de contact 5 de sorte que lorsque la découpure 11a atteint son extrémité de découpure 13a, une autre découpure 11b débute à partir de la première paroi latérale 7, à un même niveau N circonférentiel sur le bloc allongé 3. Ainsi, lorsqu'on projette les découpures 11a, 11b selon la direction circonférentielle X, il n'y a pas de superposition de découpures selon cette direction circonférentielle X. De cette manière, on limite la variation du taux d'entaillement dans le bloc allongé 3 selon cette direction circonférentielle. On notera également que comme les découpures 11a, 11b ne traversent pas le bloc allongé, on s'assure d'une bonne rigidité globale du bloc allongé 3.

Les découpures 11a, 11b débouche sur la paroi 7 en formant un angle α avec la direction circonférentielle X dans le bloc allongé.

Dans un mode de réalisation non limitatif, l'angle α est supérieur ou égal à 55°.

La **figure 2** présente une variante de réalisation dans laquelle la découpure 11b débouche sur la seconde paroi latérale 9 de sorte que le bloc allongé 3 est formé par une pluralité de sous-blocs.

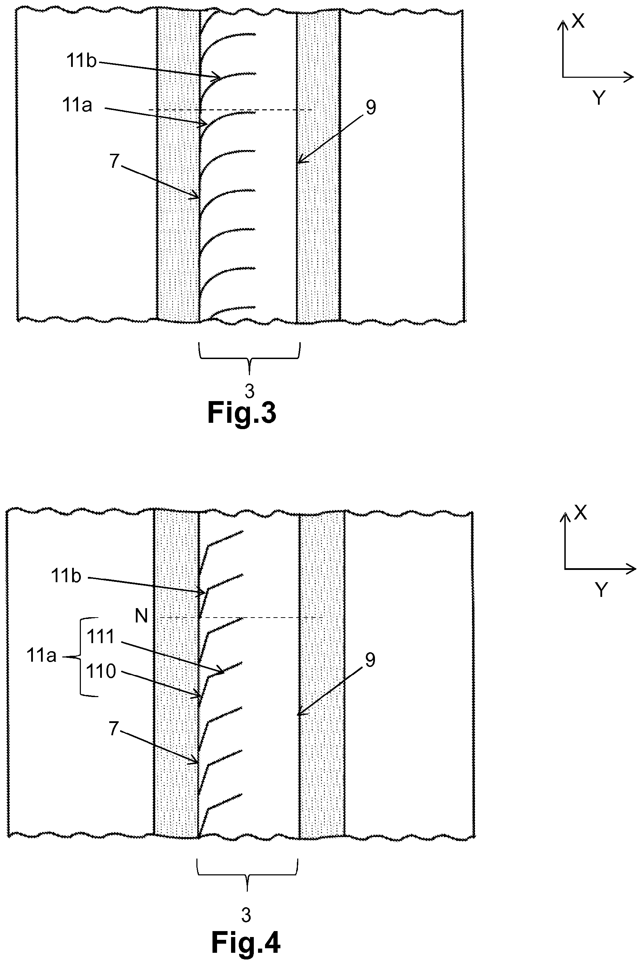

Les **figures 3** et **4** présentent des variantes de réalisation. A la **figure 3****,** les découpures 11a, 11b présentent des formes courbes sur la surface du bloc allongé 3. Sur la **figure 4****,** les découpures 11a, 11b sont complexes et comportent au moins deux parties d'inclinaisons différentes.

Dans un autre mode de réalisation non limitatif illustré à la figure 4, les découpures 11a comportent uniquement une première partie 110 et une seconde partie 111. La première partie 110 de la découpure 11a débute à partir d'une des parois latérales 7 du bloc allongé et la seconde partie 111 prolonge la première partie 110 en direction de l'autre paroi latérale 9. La première partie 110 et la seconde partie 111 comportent deux angles d'inclinaisons différents.

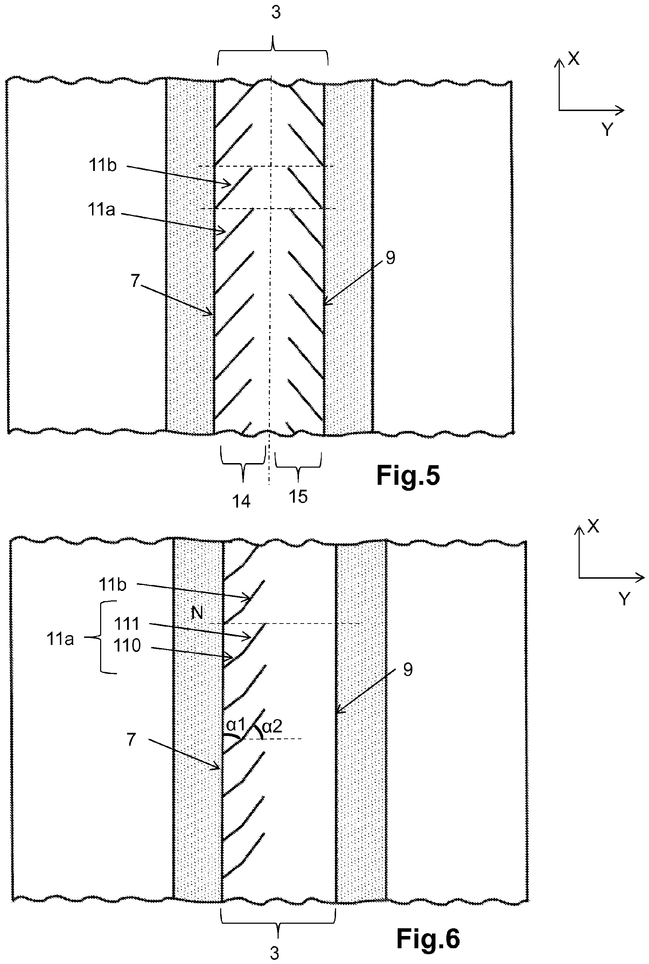

Dans un mode de réalisation non limitatif illustré à la figure 6, la première partie 110 de la découpure 11a fait un premier angle α1 avec le bloc allongé. Ce premier angle α1 est supérieur ou égal à 55°. De cette manière, on évite la création d'une zone de gomme mince et fragile entre la découpure 11a et la paroi latérale 7 du bloc allongé.

Dans un autre mode de réalisation, la seconde partie 111 fait un second angle α2 avec la direction transversale Y. Ce second angle α2 est supérieur ou égal à 55°.

La **figure 5** présente une variante de réalisation dans laquelle le bloc allongé 3 comporte une seconde série 15 de découpures. Les découpures de la seconde série de découpures sont symétriques aux découpures 11a, 11b de la première série de découpures 14, de sorte que les extrémités des découpures sont alignées aux niveaux N et N', les unes par rapport aux autres. Le taux d'entaillement sur la surface du bloc allongé est donc globalement constant le long de la direction circonférentielle.

L'invention n'est pas limitée aux exemples décrits et représentés et diverses modifications peuvent y être apportées sans sortir du cadre des revendications.

Ainsi des combinaisons d'incisions présentant des inclinaisons différentes, et/ou des formes différentes et/ou des longueurs différentes sont possibles. On diminue les émergences remarquables du spectre du bruit de la bande de roulement. Le brouillage du signal sonore émis par la sculpture du pneumatique est alors amélioré.

Dans un autre mode de réalisation, il est par exemple possible de prévoir que les découpures sont chanfreinées sur la surface de contact du bloc allongé.

## Revendications

1. Bande de roulement pour pneumatique comportant au moins un bloc (3) allongé en matériau caoutchoutique de largeur W et de longueur L avec L»W, ce bloc allongé s'étendant selon une direction circonférentielle (X) lorsque la bande de roulement (1) est montée sur le pneumatique, le bloc allongé (3) comportant une surface de contact (5) destinée à venir en contact avec un sol et une première paroi latérale (7) et une seconde paroi latérale (9) délimitant cette surface de contact (5), le bloc allongé (3) comportant une pluralité de découpures (11a, 11b) débouchant sur la surface de contact (5) du bloc allongé, les découpures (11a, 11b) s'étendant selon une direction oblique à partir de la première paroi latérale (7) en direction de la seconde paroi latérale (9) jusqu'à des extrémités (13a, 13b) de découpure **caractérisée en ce que** pour au moins une découpure (11a) débouchant sur la première paroi latérale (7), son extrémité (13a) ne débouche pas sur la seconde paroi latérale (9) et **en ce que** lorsque cette découpure (11a) atteint son extrémité de découpure (13a) une autre découpure (11b) débute à partir de la première paroi latérale (7), à un même niveau (N) circonférentiel sur le bloc allongé (3) et **en ce que** les découpures (11a, 11b) sont des incisions et **en ce que** deux découpures (11a, 11b) adjacentes dans le bloc allongé présentent des inclinaisons différentes et/ou des formes différentes et/ou des longueurs différentes.

2. Bande de roulement selon la revendication 1, **caractérisée en ce que** les découpures (11a, 11b) forment un angle α avec le bloc allongé, ledit angle α étant supérieur ou égal à 55°.

3. Bande de roulement selon l'une des revendications 1 ou 2, **caractérisée en ce que** l'autre découpure (11b) débouche sur la seconde paroi latérale (9).

4. Bande de roulement selon l'une quelconque des revendications 1 à 3, **caractérisée en ce que** les découpures (11a, 11b) présentent des formes courbes sur la surface de contact (5) du bloc allongé (3).

5. Bande de roulement selon l'une quelconque des revendications 1 à 4, **caractérisée en ce que** les découpures (11a, 11b) comportent au moins deux parties d'inclinaisons différentes.

6. Bande de roulement selon l'une quelconque des revendications 1 à 5, **caractérisée en ce que** les découpures (11a, 11b) comportent uniquement une première partie (110) et une seconde partie (111), la première partie (110) débutant à partir d'une paroi latérale (7) du bloc allongé (3).

7. Bande de roulement selon la revendication 6, **caractérisée en ce que** la première partie (110) de la découpure (11a) fait un premier angle α1 avec la direction circonférentielle (X), ledit premier angle α1 étant supérieur ou égal à 55°.

8. Bande de roulement selon la revendication 7, **caractérisée en ce que** la seconde partie (111) fait un second angle α2 avec la direction transversale (Y), ledit second angle α2 étant supérieur ou égal à 55°.

9. Bande de roulement selon l'une des revendications 1 à 8, **caractérisée en ce que** le bloc allongé (3) est une nervure.

## Patentansprüche

1. Laufstreifen für einen Reifen, welcher wenigstens einen lang gestreckten Block (3) aus Kautschukmaterial mit einer Breite W und einer Länge L mit L»W aufweist, wobei sich dieser lang gestreckte Block in einer Umfangsrichtung (X) erstreckt, wenn der Laufstreifen (1) auf dem Reifen angebracht ist, wobei der lang gestreckte Block (3) eine Kontaktfläche (5), die dazu bestimmt ist, mit einem Boden in Kontakt zu kommen, und eine erste Seitenwand (7) und eine zweite Seitenwand (9), die diese Kontaktfläche (5) begrenzen, aufweist, wobei der lang gestreckte Block (3) mehrere Ausschnitte (11a, 11b) aufweist, die an der Kontaktfläche (5) des lang gestreckten Blocks münden, wobei sich die Ausschnitte (11a, 11b) in einer schrägen Richtung von der ersten Seitenwand (7) in der Richtung der zweiten Seitenwand (9) bis zu den Ausschnittsenden (13a, 13b) erstrecken, **dadurch gekennzeichnet, dass**, wenn mindestens ein Ausschnitt (11a) an der ersten Seitenwand (7) mündet, sein Ende (13a) nicht an der zweiten Seitenwand (9) mündet, und dadurch, dass, wenn dieser Ausschnitt (11a) sein Ausschnittsende (13a) erreicht, ein anderer Ausschnitt (11b) an der ersten Seitenwand (7) auf demselben Umfangsniveau (N) auf dem lang gestreckten Block (3) beginnt, und dadurch, dass die Ausschnitte (11a, 11b) Einschnitte sind, und dadurch, dass zwei benachbarte Ausschnitte (11a, 11b) in dem lang gestreckten Block unterschiedliche Neigungen und/oder unterschiedliche Formen und/oder unterschiedliche Längen aufweisen.

2. Laufstreifen nach Anspruch 1, **dadurch gekennzeichnet, dass** die Ausschnitte (11a, 11b) einen Winkel α mit dem lang gestreckten Block bilden, wobei dieser Winkel α größer oder gleich 55° ist.

3. Laufstreifen nach einem der Ansprüche 1 oder 2, **dadurch gekennzeichnet, dass** der andere Ausschnitt (11b) an der zweiten Seitenwand (9) mündet.

4. Laufstreifen nach einem der Ansprüche 1 bis 3, **dadurch gekennzeichnet, dass** die Ausschnitte (11a, 11b) auf der Kontaktfläche (5) des lang gestreckten Blocks (3) gekrümmte Formen aufweisen.

5. Laufstreifen nach einem der Ansprüche 1 bis 4, **dadurch gekennzeichnet, dass** die Ausschnitte (11a, 11b) wenigstens zwei Teile mit unterschiedlichen Neigungen aufweisen.

6. Laufstreifen nach einem der Ansprüche 1 bis 5, **dadurch gekennzeichnet, dass** die Ausschnitte (11a, 11b) nur einen ersten Teil (110) und einen zweiten Teil (111) aufweisen, wobei der erste Teil (110) an einer Seitenwand (7) des lang gestreckten Blocks (3) beginnt.

7. Laufstreifen nach Anspruch 6, **dadurch gekennzeichnet, dass** der erste Teil (110) des Ausschnitts (11a) einen ersten Winkel α1 mit der Umfangsrichtung (X) bildet, wobei der erste Winkel α1 größer oder gleich 55° ist.

8. Laufstreifen nach Anspruch 7, **dadurch gekennzeichnet, dass** der zweite Teil (111) einen zweiten Winkel α2 mit der Querrichtung (Y) bildet, wobei der zweite Winkel α2 größer oder gleich 55° ist.

9. Laufstreifen nach einem der Ansprüche 1 bis 8, **dadurch gekennzeichnet, dass** der lang gestreckte Block (3) eine Rippe ist.

## Claims

1. Tread for a tyre comprising at least one elongate block (3) of rubbery material of width W and of length L with L >> W, this elongate block extending in a circumferential direction (X) when the tread (1) is mounted on the tyre, the elongate block (3) comprising a contact surface (5) intended to come into contact with the ground and a first lateral wall (7) and a second lateral wall (9) delimiting this contact surface (5), the elongate block (3) comprising a plurality of cuts (11a, 11b) opening onto the contact surface (5) of the elongate block, the cuts (11a, 11b) extending in an oblique direction from the first lateral wall (7) in the direction of the second lateral wall (9) as far as cut ends (13a, 13b), **characterized in that,** for at least one cut (11a) opening onto the first lateral wall (7), the end (13a) thereof does not open onto the second lateral wall (9) and **in that** when this cut (11a) reaches its cut end (13a) another cut (11b) starts from the first lateral wall (7), at the same circumferential level (N) on the elongate block (3), and **in that** the cuts (11a, 11b) are sipes and **in that** two adjacent cuts (11a, 11b) in the elongate block have different inclinations and/or different shapes and/or different lengths.

2. Tread according to Claim 1, **characterized in that** the cuts (11a, 11b) form an angle α with the elongate block, the said angle α being greater than or equal to 55°.

3. Tread according to either of Claims 1 and 2, **characterized in that** the other cut (11b) opens onto the second lateral wall (9).

4. Tread according to any one of Claims 1 to 3, **characterized in that** the cuts (11a, 11b) have curved shapes on the contact surface (5) of the elongate block (3).

5. Tread according to any one of Claims 1 to 4, **characterized in that** the cuts (11a, 11b) have at least two parts with different inclinations.

6. Tread according to any one of Claims 1 to 5, **characterized in that** the cuts (11a, 11b) have only a first part (110) and a second part (111), the first part (110) beginning from a lateral wall (7) of the elongate block (3).

7. Tread according to Claim 6, **characterized in that** the first part (110) of the cut (11a) makes a first angle α1 with the circumferential direction (X), the said first angle α1 being greater than or equal to 55°.

8. Tread according to Claim 7, **characterized in that** the second part (111) makes a second angle α2 with the transverse direction (Y), the said second angle α2 being greater than or equal to 55°.

9. Tread according to one of Claims 1 to 8, **characterized in that** the elongate block (3) is a rib.
